# EUROPÄISCHE PATENTSCHRIFT

(11) **EP 2 915 998 B1**
(45) Veröffentlichungstag und Bekanntmachung des Hinweises auf die Patenterteilung: **28.02.2018**
(21) Anmeldenummer: 14157792.4
(22) Anmeldetag: 05.03.2014
(51) Int. Cl.: F03D 7/02, F03D 17/00

(54) **Verfahren zum Betrieb einer Windenergieanlage**
Method for operating a wind turbine
Procédé de fonctionnement d'une éolienne

(43) Veröffentlichungstag der Anmeldung: 09.09.2015
(73) Patentinhaber: Nordex Energy GmbH, 22419 Hamburg (DE)
(72) Erfinder: von Aswege, Enno, 22299 Hamburg (DE); Merkel, Maximilian, 21149 Hamburg (DE)
(74) Vertreter: Hauck Patentanwaltspartnerschaft mbB

(56) Entgegenhaltungen:
- EP-A1- 2 290 232
- EP-A1- 2 497 946
- EP-A2- 2 256 339
- US-A1- 2011 193 343

## Beschreibung

Die vorliegende Erfindung betrifft ein Verfahren zum Betrieb einer Windenergieanlage, die mindestens zwei in ihrem Blatteinstellwinkel verstellbare Rotorblätter aufweist.

Die Erfindung betrifft den Betrieb einer Windenergieanlage, deren Rotorblätter jeweils um ihre Längsachse verstellbar sind, um einen Blatteinstellwinkel des Rotorblatts zu verändern. Durch eine Verstellung des Blatteinstellwinkels verändert sich das Strömungsverhalten der Luft an dem Rotorblatt, so dass das aus dem Wind aufgenommene Moment variiert werden kann.

Im Hinblick auf die Einstellung des Blatteinstellwinkels an mehreren Rotorblättern ist eine Reihe von unterschiedlichen Ansätzen bekannt. Zunächst kann eine gemeinsame, alle Rotorblätter gleichermaßen betreffende Verstelleinrichtung für den Blatteinstellwinkel, eine sogenannte Zentralpitcheinrichtung, vorgesehen sein. Demgegenüber stehen Windenergieanlagen, bei denen für jedes Rotorblatt separate Aggregate für die Einstellung des Blatteinstellwinkels vorgesehen sein können. Diese werden fachsprachlich auch als Einzelpitcheinrichtungen bezeichnet. In diesem Zusammenhang ist es bekannt, dass die Einzelpitcheinrichtungen als kollektive Pitchregelung oder individuelle Pitchregelung geregelt werden können.

Aus EP 2 290 232 A1 ist eine Steuerung für einen Blatteinstellwinkel bekannt, mit der die aerodynamische Last einer angehaltenen Windenergieanlage reduziert werden kann. Hierzu werden die Blatteinstellwinkel der Rotorblätter auf ihr Übereinstimmen überprüft und anschließend individuell in die Fahnenposition verfahren.

Aus EP 1 910 670 B1 ist ein Verfahren zum Betrieb einer Windenergieanlage mit Einzelpitcheinrichtungen bekannt, bei dem für jede Einzelpitcheinrichtung zusätzlich ein separater Störfalldetektor und eine eigene Auslösevorrichtung vorgesehen ist, wobei der Störfalldetektor zum Erkennen von abnormalen Betriebszuständen ausgebildet und mit der Auslöseeinrichtung verbunden ist, die ein Verstellen des jeweiligen Rotorblatts in seine Abschaltposition bewirkt. Die Detektion des Störfalles erfolgt autark für jede der Einzelpitcheinrichtungen.

Aus EP 2 497 946 A1 ist ein Verfahren bekannt, um bei einer Windenergieanlage ein Ungleichgewicht der Blatteinstellwinkel festzustellen. Hierzu wird die Gondel der Windenergieanlage durch einen Azimutantrieb verschwenkt und ein durch das Ändern des Azimutwinkels gewonnenes Lastsignal im Hinblick auf die Frequenzkomponente des Lastsignals analysiert, um eine ungleichmäßige Belastung der Rotorblätter festzustellen.

Aus EP 2 329 141 B1 ist ein Verfahren bekannt, um die Funktionsweise und den Betrieb einer Windenergieanlage mit Einzelpitcheinrichtungen, abhängig von einer auftretenden Differenz des Istwerts zum vorgegebenen Sollwert, auszuwerten. Hierdurch können beispielsweise Fehler in der Lagerung der Rotorblätter erkannt werden.

Aus EP 2 256 339 A2 ist ein Verfahren zur Überwachung von Einzelpitcheinrichtungen bei einer Windenergieanlage bekannt, bei dem ein Steuersignal in aufeinander folgenden Zeitschritten erzeugt und als Zeitreihe gespeichert wird. Es wird ein Alarmzustand ausgelöst, wenn ein aus der Zeitreihe abgeleitetes Alarmsignal einen Schwellwert überschreitet. Das Alarmsignal bestimmt sich hierbei aus der Variation der Steuersignale über die Zeit. Auch bei diesem Ansatz, einen Fehler in einer Windenergieanlage mit Einzelpitcheinrichtungen zu erkennen, wird nur auf Werte abgestellt, die an einer einzelnen Pitcheinrichtung vorliegen und sich auf die einzelne Pitcheinrichtung beziehen.

Der Erfindung liegt die Aufgabe zugrunde, ein Verfahren zum Betrieb einer Windenergieanlage mit Einzelpitcheinrichtungen bereitzustellen, bei dem Fehler in den Einzelpitcheinrichtungen und deren Regelung frühzeitig und zuverlässig erkannt werden können.

Erfindungsgemäß wird die Aufgabe durch ein Verfahren mit den Merkmalen aus Anspruch 1 gelöst. Vorteilhafte Ausgestaltungen bilden den Gegenstand der Unteransprüche.

Die Erfindung betrifft ein Verfahren zum Betrieb einer Windenergieanlage, die mit mindestens zwei in ihrem Blatteinstellwinkel verstellbaren Rotorblättern ausgestattet ist. Bei dem Verfahren wird zunächst ein Istwert des Blatteinstellwinkels für jedes der Rotorblätter gemessen. Ferner wird durch Subtraktion von zwei gemessenen Istwerten der Blatteinstellwinkel voneinander mindestens ein Differenzwert bestimmt. Der oder die Differenzwerte, bevorzugt deren Absolutbeträge, werden mittels logischer Verknüpfungen ausgewertet, wobei das hieraus ermittelte Verknüpfungsergebnis bzw. die Verknüpfungsergebnisse aufakkumuliert werden. Beim Aufakkumulieren wird dem bisher aufakkumulierten Wert jeweils ein aktuelles Verknüpfungsergebnis hinzugefügt. Der oder die aufakkumulierten Werte werden mit einem vorbestimmten Schwellwert verglichen und es wird ein Fehlersignal ausgelöst, falls der oder die aufakkumulierten Werte den vorbestimmten Schwellwert überschreiten, wobei ein Fehlersignal auch bereits bei Erreichen des Schwellwerts ausgelöst werden kann.

Ein Aspekt des erfindungsgemäßen Verfahrens besteht darin, dass während des Betriebs der Windenergieanlage Differenzen zwischen den Blatteinstellwinkeln der Rotorblätter erfasst, mittels logischer Verknüpfungen ausgewertet und die aktuellen Verknüpfungsergebnisse über die Zeit aufakkumuliert werden. Der aufakkumulierte Wert dient als Vergleichswert zur Beurteilung der erfolgten Steuerung/Regelung der Blatteinstellwinkel. Dies bedeutet, dass je größer die Blattwinkeldifferenzen sind und je länger diese bestehen, desto wahrscheinlicher kann das als Vorhandensein eines Fehlers angesehen werden. Im Gegensatz zu vielen anderen Fehlererkennungsverfahren oder Fehlerdetektoren wird hierbei zur Erkennung des Fehlers auf die Information von zwei Blatteinstellwinkeln zurückgegriffen.

In einer bevorzugten Ausgestaltung werden die Istwerte der Blatteinstellwinkel von drei Rotorblättern gemessen und daraus drei Differenzwerte bestimmt.

Grundsätzlich kann bei mehr als drei gemessenen Istwerten der Blatteinstellwinkel jeweils die gleiche Anzahl von Differenzwerten gebildet werden, wie erfasste Istwerte der Blatteinstellwinkel vorliegen. Lediglich in dem Fall, dass die Istwerte der Blatteinstellwinkel nur an zwei Rotorblättern gemessen werden, kann nur ein einziger Differenzwert gebildet werden.

In einer bevorzugten Weiterbildung des Verfahrens wird, wenn mehr als ein Differenzwert vorliegt, der größte der gebildeten Differenzwerte ausgewählt, logisch ausgewertet und das entsprechende logische Verknüpfungsergebnis nachfolgend aufakkumuliert. In dem Fall, dass nur ein Differenzwert vorliegt, wird nur dieser logisch ausgewertet und das logische Verknüpfungsergebnis nachfolgend aufakkumuliert.

In einer bevorzugten Weiterbildung des erfindungsgemäßen Verfahrens werden die Differenzwerte mittels logischer Verknüpfungen mit Bereichswerten verglichen und die Ergebnisse des Vergleichs liegen als logische Verknüpfungsergebnisse vor. Die logischen Verknüpfungsergebnisse können mit Bereichsgewichten gewichtet werden. Diese Schritte können auch unabhängig davon durchgeführt werden, ob der maximale Differenzwert selektiert wurde. In dem Fall, dass der maximale Differenzwert ausgewählt wurde, wird dieser Wert mittels logischer Verknüpfungen mit einem oder mehreren Bereichswerten verglichen, um nachfolgend gegebenenfalls das oder die logischen Verknüpfungsergebnisse mit einem oder mehreren Bereichsgewichten zu gewichten. Die Gewichtung der logischen Verknüpfungsergebnisse erlaubt es, großen Differenzwerten, die üblicherweise ein Indiz für einen vorliegenden Fehler sind, ein größeres Gewicht zu geben, als kleineren Differenzwerten, die technisch weniger ins Gewicht fallen.

In einer bevorzugten Weiterbildung sind zwei Bereichswerte vorgesehen, wobei der erste Bereichswert einen Bereich mit sehr großen Differenzen zwischen den Blatteinstellwinkeln und der zweite Bereichswert einen Bereich mit großen Differenzen zwischen den Blatteinstellwinkeln begrenzt.

In einer bevorzugten Ausgestaltung wird einem logischen Verknüpfungsergebnis, das sich auf einen Differenzwert bezieht, der kleiner als der zweite Bereichswert ist, ein negatives Gewicht gegeben, das den Wert der aufakkumulierten logischen Verknüpfungsergebnisse vermindert. Auf diese Weise kann, wenn nur kleine Differenzen zwischen den Blatteinstellwinkeln der Windenergieanlage auftreten, verhindert werden, dass der aufakkumulierte Wert zu stark wächst. Bevorzugt ist der aufakkumulierte Wert auf werte größer oder gleich Null beschränkt.

In einer weiteren bevorzugten Ausgestaltung kann ein über die Zeit erfolgendes Abklingen der aufakkumulierten Werte vorgesehen sein. Auf dieser Weise kann den vor längerer Zeit erfassten Differenzwerten ein geringeres Gewicht zugeordnet werden als jüngst erfassten Differenzwerten.

Ein bevorzugtes Ausführungsbeispiel des erfindungsgemäßen Verfahrens wird anhand eines Blockdiagramms näher erläutert.

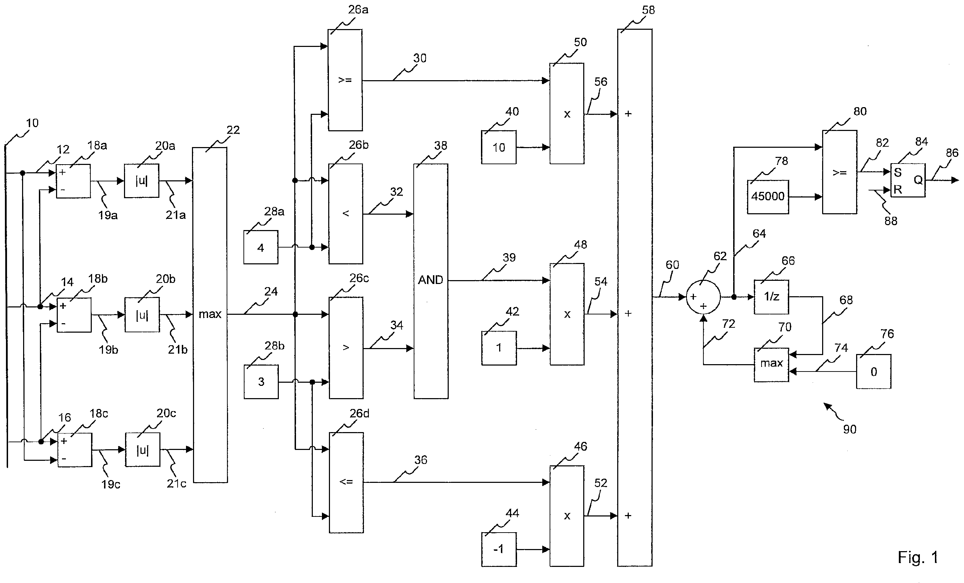

In der einzigen Figur 1 werden in Schritt 10 die Istwerte der Blatteinstellwinkel 12, 14, 16 von drei Rotorblättern ermittelt. Die Istwerte 12, 14, 16 werden an die Differenzbildner 18a - c weitergeleitet. An dem Differenzbildner 18a liegen die Istwerte 12 und 14 an. An dem Differenzbildner 18b liegen die Istwerte 14 und 16 und an dem Differenzbildner 18c liegen die Istwerte 12 und 16 an. Die in dem Ausführungsbeispiel dargestellte Zuordnung der Istwerte 12 bis 16 auf die Differenzbildner 18a bis 18c ist beliebig und kann entsprechend permutiert werden. Die Ausgangssignale 19a bis 19c der Differenzbildner 18a bis 18c liegen als Eingangssignale an den Betragsbildnern 20a bis 20c an.

Da bei der Betrachtung der Differenzwerte die Vorzeichen nicht beachtet werden sollen, wird durch die Betragsbildner 20a - c jeweils der Absolutbetrag gebildet. Hierdurch ist es dann unerheblich, ob der eine Rotorblatteinstellwinkel dem anderen vorausläuft oder nicht. Die Ausgangssignale 21a bis 21c der Betragsbildner 20a bis 20c werden nachfolgend an einen Maximumsbildner 22 weitergeleitet, der das Maximum der Ausgangssignale 21a - c auswählt. Der Ausgang des Maximumsbildners 22 zeigt also die größte Differenz zwischen zwei Istwerten der Blatteinstellwinkel an. Das Ausgangssignal 24 des Maximumsbildners 22 wird nachfolgend an vier Komparatoren 26a - d weitergeleitet. An den Komparatoren 26a und 26b liegt zudem der erste Bereichswert 28a an, der beispielsweise auf den Wert 4 gesetzt sein kann und sehr große Differenzen zwischen den Blatteinstellwinkeln kennzeichnet. An den Komparatoren 26c und 26d liegt der zweite Bereichswert 28b an, der beispielsweise auf den Wert 3 gesetzt sein kann und große Differenzen zwischen den Blatteinstellwinkeln kennzeichnet. Die Komparatoren 26a - d vergleichen jeweils das anliegende Ausgangssignal 24 mit den anliegenden Bereichswerten 28a, 28b. Wie in Figur 1 zu erkennen, sind die Komparatoren 26a und 26b in ihrer Funktion zueinander entgegengesetzt. Dies bedeutet, dass der Komparator 26a ein Ausgangssignal 30 mit dem Wert 1 erzeugt, wenn das Ausgangssignal 24 gleich dem ersten Bereichswert 28a oder größer als der erste Bereichswert 28a ist. In diesem Fall liegt an dem Komparator 26b ein Ausgangssignal 32 mit dem Wert 0 an. Wenn das Ausgangssignal 24 kleiner als der erste Bereichswert 28a ist, dann liegt an dem Komparator 26a ein Ausgangssignal 30 mit dem Wert 0 und an dem Komparator 26b ein Ausgangssignal 32 mit dem Wert 1 an. Der Komparator 26d erzeugt ein Ausgangssignal 36 mit dem Wert 1, wenn das anliegende Ausgangssignal 24 gleich dem zweiten Bereichswert 28b oder kleiner als der zweite Bereichswert 28b ist. Der Komparator 26c ist komplementär zu dem Komparator 26d und erzeugt ein Ausgangssignal 34 mit dem Wert 1, wenn das Ausgangssignal 24 größer als der zweite Bereichswert 28b ist. Die Ausgangssignale 32 und 34 der Komparatoren 26b, 26c liegen als Eingänge an einem Und-Gatter 38 an. Das Und-Gatter 38 erzeugt ein Ausgangssignal 39 mit dem Wert 1, wenn sowohl der Komparator 26b als auch der Komparator 26c ein Ausgangssignal 32 bzw. 34 mit dem Wert 1 führt.

Zusammenfassend ergibt der vorstehend beschriebene Aufbau aus vier Komparatoren 26a - d und zwei Bereichswerten 28a, 28b im Ergebnis, dass das Ausgangssignal 30 mit dem Wert 1 vorliegt, wenn das Ausgangssignal 24 gleich dem ersten Bereichswert 28 a oder größer als der erste Bereichswert 28a ist. Ein Ausgangssignal 39 mit dem Wert 1 liegt vor, wenn das Ausgangssignal 24 zwischen dem ersten Bereichswert 28a und dem zweiten Bereichswert 28b liegt, wobei vorausgesetzt wird, dass der zweite Bereichswert 28b kleiner als der erste Bereichswert 28a ist. Ein Ausgangssignal 36 mit dem Wert 1 liegt vor, wenn das Ausgangssignal 24 gleich dem zweiten Bereichswert 28b oder kleiner als der zweite Bereichswert 28b ist.

Das Ausgangssignal 36 des Komparators 26d wird in einem Multiplikator 46 mit einem Bereichsgewicht 44 multipliziert. In dem dargestellten Beispiel kann das Ausgangssignal 36, das die Werte 0 oder 1 annehmen kann, beispielsweise mit dem Faktor minus 1 multipliziert werden, so dass das Ausgangssignal 52 des Multiplikators 46 die Werte 0 oder minus 1 annehmen kann. Das Ausgangssignal 39 der Und-Verknüpfung 38, das die Werte 0 oder 1 annehmen kann, wird mit einem Bereichsgewicht 42 multipliziert, das beispielsweise den Wert 1 besitzt. Das Ergebnis der in dem Multiplikator 48 durchgeführten Multiplikation entspricht in dem dargestellten Beispiel somit dem Wert des Ausgangssignals 39. Das Ausgangssignal 30 des Komparators 26a, das die Werte 0 oder 1 annehmen kann, wird in einem Multiplikator 50 mit einem Bereichsgewicht 40 multipliziert. In dem dargestellten Beispiel ist das Bereichsgewicht 40 auf den Wert 10 gesetzt. Das Ergebnis der in dem Multiplikator 50 durchgeführten Multiplikation liegt als Ausgangssignal 56 vor und kann somit die Werte 0 oder 10 annehmen. Die Ausgangssignale 52, 54, 56 der Multiplikatoren 46, 48, 50 liegen an einem Additionsglied 58 an, das die Signale zusammenführt, wobei zu einem betrachteten Zeitpunkt jeweils eines der Ausgangssignale 52, 54, 56 einen Wert aufweist, der von 0 verschieden ist und zwei der Ausgangssignale 52, 54, 56 einen Wert 0 führen. Nachfolgend wird das Ausgangssignal 60 des Additionsglieds 58 an einen Akkumulator 90 weitergeleitet, der aus einem Additionsglied 62, einer Verzögerungseinheit 66 und einem Maximumsbildner 70 besteht. Die Werte des Ausgangssignals 60 werden in dem Additionsglied 62 zeitdiskret aufakkumuliert. Dabei wird der aufakkumulierte Wert als Ausgangssignal 64 an eine Verzögerungseinheit 66 weitergeleitet, die diesen als Ausgangssignal 68 an einen Maximumsbildner 70 übergibt. Das Ausgangssignal 68 der Verzögerungseinheit 66 liegt somit, um einen Zeitschritt verzögert, an dem Maximumsbildner 70 an, der das Ausgangssignal 68 mit einem Vergleichswert 76, der beispielsweise Null ist, vergleicht. Auf diese Weise wird sichergestellt, dass das über den Maximumsbildner 70 auf das Additionsglied 62 zurückgeführte Ausgangssignal 72 keine negativen Werte annehmen kann.

Der auf diese Weise durch das Additionsglied 62 aufakkumulierte Wert liegt als Ausgangssignal 64 gemeinsam mit einem Schwellwert 78 eingangsseitig an einem Komparator 80 an. Der Komparator 80 erzeugt ein Ausgangssignal 82 mit dem Wert 1, sobald der aufakkumulierte Wert gleich dem Schwellwert 78 oder größer als der Schwellwert 78 ist, der beispielsweise auf den Wert 45000 gesetzt sein kann. Das Ausgangssignal 82 führt auf den Eingang "S" eines Speicherglieds 84. Das Ausgangssignal 86 des Speicherglieds 84 wird in dem Fall auf den Wert 1 gesetzt, wenn das Ausgangssignal 82 den Wert 1 aufweist, wobei das Ausgangssignal 86 als Fehlersignal interpretiert wird. Durch ein Signal 88 mit dem Wert 1 am Eingang "R" des Speicherglieds 84 kann das Ausgangssignal 86 des Speicherglieds 84 auf den Wert 0 zurückgesetzt werden.

Der besondere Vorteil des erfindungsgemäßen Verfahrens besteht darin, dass dieses auch in Steuerungen mit eingeschränktem Sprachumfang zuverlässig programmiert werden kann. Insbesondere kann die Erfindung auch in den Sicherheitssteuerungen zur Überwachung der Verstelleinrichtungen für den Blatteinstellwinkel umgesetzt werden, selbst wenn diese häufig nur einen sehr eingeschränkten Sprachumfang für die Programmierung zur Verfügung stellen. Zudem besitzt das erfindungsgemäße Verfahren selbst ein ausreichendes Sicherheitsniveau und kann parallel zur sonst eingesetzten Betriebsführung der Windenergieanlage verwendet werden. Mit dem erfindungsgemäßen Verfahren werden Fehlfunktionen, insbesondere im Rahmen einer individuellen Pitchregelung frühzeitig erkannt und somit hohe mechanische Beanspruchungen der Windenergieanlage vermieden. Die hohen Belastungen müssen dabei nicht in der Auslegung der Windenergieanlage berücksichtigt werden, was sich auch vorteilhaft auf die Gesamtauslegung der Windenergieanlage auswirkt.

## Patentansprüche

1. Verfahren zum Betrieb einer Windenergieanlage, mit mindestens zwei in ihrem Blatteinstellwinkel verstellbaren Rotorblättern, **gekennzeichnet durch**:
- Messen eines Istwertes (12, 14, 16) des Blatteinstellwinkels für jedes der Rotorblätter,
- Bilden mindestens eines Differenzwertes (19a, 19b, 19c) durch Subtrahieren (18a, 18b, 18c) von zwei gemessenen Istwerten der Blatteinstellwinkel (12, 14, 16) voneinander,
- Bilden mindestens eines Verknüpfungsergebnisses (60) durch logische Verknüpfungen mindestens eines der Differenzwerte (19a, 19b, 19c),
- Bilden eines aufakkumulierten Wertes (64) durch Aufakkumulieren (90) des mindestens einen Verknüpfungsergebnisses (60) und
- Vergleichen (80) des aufakkumulierten Wertes (64) mit einem vorbestimmten Schwellwert (78) und
- Auslösen eines Fehlersignals (86), falls der aufakkumulierte Wert (64) den vorbestimmten Schwellwert (78) überschreitet.

2. Verfahren nach Anspruch 1, **dadurch gekennzeichnet, dass** die Istwerte der Blatteinstellwinkel (12, 14, 16) von drei Rotorblättern gemessen und drei Differenzwerte (19a, 19b, 19c) bestimmt werden.

3. Verfahren nach Anspruch 1 oder 2, **dadurch gekennzeichnet, dass** von dem mindestens einen Differenzwert (19a, 19b, 19c) jeweils ein Absolutbetrag (20a, 20b, 20c) gebildet wird.

4. Verfahren nach einem der Ansprüche 1 bis 3, **dadurch gekennzeichnet, dass** aus den Differenzwerten (19a, 19b, 19c) durch Maximumsbildung (22) ein größter Differenzwert (24) bestimmt wird, der die Grundlage für das mindestens eine Verknüpfungsergebnis (60) bildet.

5. Verfahren nach einem der Ansprüche 1 bis 4, **dadurch gekennzeichnet, dass** ein erster Bereichswert (28a) und ein zweiter Bereichswert (28b) vorgesehen sind, wobei der erste Bereichswert (28a) einen Bereich mit sehr großen Differenzen zwischen den Blatteinstellwinkeln der Rotorblätter und der zweite Bereichswert (28b) einen Bereich mit großen Differenzen zwischen den Blatteinstellwinkeln der Rotorblätter begrenzt.

6. Verfahren nach Anspruch 4, **dadurch gekennzeichnet, dass** der größte Differenzwert (24) mit einem oder mehreren Bereichswerten (28a, 28b) verglichen wird und dass das bzw. die Ergebnisse der Vergleiche als ein oder mehrere logische Verknüpfungsergebnisse (30, 36, 39) vorliegen.

7. Verfahren nach Anspruch 6, **dadurch gekennzeichnet, dass** die logischen Verknüpfungsergebnisse (30, 36, 39) jeweils mit einem Bereichsgewicht (40, 42, 44) gewichtet werden.

8. Verfahren nach Anspruch 6, **dadurch gekennzeichnet, dass** das logische Verknüpfungsergebnis (36), das einem Wert des größten Differenzwerts (24) unterhalb des zweiten Bereichswerts (28b) entspricht, mit einem negativen Bereichsgewicht (44) gewichtet wird, das den aufakkumulierten Wert (64) vermindert.

9. Verfahren nach einem der Ansprüche 1 bis 8, **dadurch gekennzeichnet, dass** der aufakkumulierte Wert (64) über die Zeit abklingt.

## Claims

1. A method of operating a wind turbine having at least two rotor blades adjustable in their blade pitch angle, **characterised by**
• measuring an actual value (12, 14. 16) of the blade pitch angle for each one of the rotor blades,
• calculating at least one difference value (19a, 19b, 19c) by subtracting (18a, 18b, 18c) two measured actual values of the blade pitch angles (12, 14. 16) from each other,
• generating at least one logic operation result (60) by logical links of at least one of the difference values (19a, 19b, 19c)
• generating an accumulated value (64) by accumulating (90) the at least one logic operation result (60), and
• comparing (80) the accumulated value (64) with a predetermined threshold value (78), and
• triggering an error signal (86) in case that the accumulated value (64) exceeds the predetermined threshold value (78).

2. The method according to claim 1, **characterised in that** the actual values of the blade pitch angles (12, 14, 16) of three rotor blades are measured and three difference values (19a, 19b, 19c) are determined.

3. A method according to claim 1 or 2, **characterised in that** a respective absolute value (20a, 20b, 20c) is generated from the at least one difference value (19a, 19b, 19c).

4. A method according to any one of the claims 1 to 3, **characterised in that** a greatest difference value (24) is determined from the difference values (19a, 19b, 19c) by maximum generation (22) which is the basis for the at least one logic operation result (60).

5. A method according to any one of the claims 1 to 4, **characterised in that** a first range value (28a) and a second range value (28b) are provided, wherein the first range value (28a) limits a range with very great differences between the blade pitch angles of the rotor blades, and the second range value (28b) limits a range with great differences between the blade pitch angles of the rotor blades.

6. The method according to claim 4, **characterised in that** the greatest difference value (24) is compared with one or several range values (28a, 28b) and that the result(s) of the comparison(s) is/are existent as one or several logic operation result(s) (30, 36, 39).

7. The method according to claim 6, **characterised in that** the logic operation results (30, 36, 39) are each one weighted with a range weight (40, 42, 44).

8. The method according to claim 6, **characterised in that** the logic operation result (36) which matches a value of the greatest difference value (24) below the second range value (28b), is weighted with a negative range weight (44) which diminishes the accumulated value (64).

9. A method according to any one of the claims 1 to 4, **characterised in that** the accumulated value (64) gradually decreases.

## Revendications

1. Procédé d'opération d'une éolienne avec au moins deux pales de rotor ajustables en leurs pas des pales, **caractérisé par**:
• mesurer une valeur réelle (12, 14. 16) du pas de pale pour chacune des pales du rotor,
• calculer au moins une valeur différentielle (19a, 19b, 19c) en soustrayant (18a, 18b, 18c) l'une de l'autre de deux valeurs réelles mesurées des pas de pale (12, 14. 16),
• générer au moins un résultat de combinaison (60) par des combinaisons logiques d'au moins une des valeurs différentielles (19a, 19b, 19c)
• générer une valeur accumulée (64) par accumulation (90) de l'au moins un résultat de combinaison (60), et
• comparer (80) la valeur accumulée (64) avec une valeur seuil (78) prédéterminée, et
• déclencher un signal d'erreur (86) dans le cas que la valeur accumulée (64) excède la valeur seuil (78) prédéterminée.

2. Procédé selon la revendication 1, **caractérisé en ce que** les valeurs réelles des pas des pale (12, 14. 16) de trois pales de rotor sont mesurées et trois valeurs différentielles (19a, 19b, 19c) sont déterminées.

3. Procédé selon la revendication 1 ou 2, **caractérisé en ce qu'**une valeur absolue (20a, 20b, 20c) est respectivement générée de l'au moins une valeur différentielle (19a, 19b, 19c).

4. Procédé selon l'une quelconque des revendications 1 à 3, **caractérisé en ce qu'**une valeur différentielle (24) plus grande est déterminée à partir des valeurs différentielles (19a, 19b, 19c) par génération du maximum (22) qui forme la base pour l'au moins un résultat de combinaisons logiques (60).

5. Procédé selon l'une quelconque des revendications 1 à 4, **caractérisé en ce qu'**une première valeur de plage (28a) et une deuxième valeur de plage (28b) sont prévues, la première valeur de plage (28a) limitant une plage avec très grandes différences entre les pas des pale des pales du rotor, et la deuxième valeur de plage (28b) limitant une plage avec grandes différences entre les pas des pale des pales du rotor.

6. Procédé selon la revendication 4, **caractérisé en ce que** la valeur différentielle plus grande (24) est comparée avec une ou plusieurs valeurs de plage (28a, 28b) et que le(s) résultat(s) des comparaisons existe(nt) comme un ou plusieurs résultats de combinaisons logiques (30, 36, 39).

7. Procédé selon la revendication 6, **caractérisé en ce que** les résultats de combinaisons logiques (30, 36, 39) sont chacun pondérés avec un poids de plage (40, 42, 44) respectif.

8. Procédé selon la revendication 6, **caractérisé en ce que** le résultat de combinaisons logiques (36) qui correspond à une valeur de la valeur différentielle plus grande (24) au-dessous de la deuxième valeur de plage (28b), est pondérée avec un poids de plage négatif (44) qui diminue la valeur accumulée (64).

9. Procédé selon l'une quelconque des revendications 1 à 4, **caractérisé en ce que** la valeur accumulée (64) graduellement décroît.
